(19) Europäisches Patentamt / European Patent Office / Office européen des brevets

(11) **EP 2 647 674 B1**

(12) **EUROPEAN PATENT SPECIFICATION**

(45) Date of publication and mention of the grant of the patent:
**06.06.2018 Bulletin 2018/23**

(21) Application number: **11845467.7**

(22) Date of filing: **29.08.2011**

(51) Int Cl.:
*B41J 2/01* *(2006.01)*          *B41M 5/00* *(2006.01)*
*C09D 11/322* *(2014.01)*          *C09D 11/102* *(2014.01)*
*C09D 11/106* *(2014.01)*          *B01F 17/00* *(2006.01)*
*C09D 11/10* *(2014.01)*

(86) International application number:
**PCT/JP2011/069414**

(87) International publication number:
**WO 2012/073563 (07.06.2012 Gazette 2012/23)**

(54) **BINDER FOR INKJET PRINTING INK, INKJET PRINTING INK, PRINTED MATTER, AND BINDER PRODUCTION METHOD**

BINDEMITTEL FÜR EINE TINTENSTRAHLDRUCKTINTE, TINTENSTRAHLDRUCKTINTE, BEDRUCKTES MATERIAL UND HERSTELLUNGSVERFAHREN FÜR DAS BINDEMITTEL

LIANT POUR UNE ENCRE D'IMPRESSION À JET D'ENCRE, ENCRE D'IMPRESSION À JET D'ENCRE, MATIÈRE IMPRIMÉE ET PROCÉDÉ DE FABRICATION DU LIANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2010 JP 2010266549**

(43) Date of publication of application:
**09.10.2013 Bulletin 2013/41**

(73) Proprietor: **DIC Corporation**
**Tokyo 174-8520 (JP)**

(72) Inventors:
• **KURIYAMA Chisato**
**Takaishi-shi**
**Osaka 592-0001 (JP)**
• **KITADA Mitsuru**
**Takaishi-shi**
**Osaka 592-0001 (JP)**
• **NAGAHAMA Sadamu**
**Takaishi-shi**
**Osaka 592-0001 (JP)**
• **MATSUOKA Ryuichi**
**Takaishi-shi**
**Osaka 592-0001 (JP)**

(74) Representative: **Beckmann, Claus et al**
**Kraus & Weisert**
**Patentanwälte PartGmbB**
**Thomas-Wimmer-Ring 15**
**80539 München (DE)**

(56) References cited:
JP-A- 6 001 940          JP-A- 2000 351 805
JP-A- 2002 256 184          JP-A- 2003 096 337
JP-A- 2005 523 351          JP-A- 2010 229 310
KR-A- 20100 121 244          US-A1- 2009 020 036
US-A1- 2010 273 930

**Description**

Technical Field

The present invention relates to a method for producing a binder for ink that can be used for ink-jet printing.

Background Art

Recently, in the ink-jet printing industry, which has been significantly growing, the realization of high-performance ink-jet printers, the improvement of inks, and the like have markedly progressed, and it has become possible to obtain very fine images with high gloss which are substantially equivalent to film photos even in ordinary households.

In particular, the improvement of inks, such as a shift from known dye inks to pigment inks or a shift from solvent-based inks to aqueous inks, has been rapidly advanced in order to increase the image quality and reduce the load on the environment. At present, inks based on aqueous pigment inks are being actively developed.

Such inks have been required to have a higher level of performance year by year with the realization of high-performance ink-jet printers. For example, in addition to good color-developing properties and high gloss that have been conventionally required, scratch resistance at such a level that discoloration, degradation, and the like of printed images due to detachment of pigments caused by friction or the like when external forces are exerted to the surface of the printed images can be prevented has been strongly demanded in recent years.

For example, the following ink-jet recording ink containing a pigment, an aqueous resin, and an aqueous medium is known as the above ink having high scratch resistance. In the ink-jet recording ink, the aqueous resin is a polyurethane resin obtained by a reaction of an organic diisocyanate with a diol having a polyoxyethylene structure, and the polyurethane resin has a carboxyl group and also has a particular acid value, a particular number-average molecular weight, and a particular amount of the polyoxyethylene structure (e.g., refer to PTL 1).

Images printed with the ink-jet recording ink have scratch resistance to a certain degree that, for example, the detachment of pigments due to rubbing between paper sheets can be prevented.

However, a higher level of scratch resistance is required with the expansion of the fields to which ink-jet printed matter is applied. In such circumstances, printed images formed using the ink-jet recording ink are sometimes still discolored, degraded, or damaged because of the detachment or the like of pigments, for example, when strong external forces are locally exerted. There is also a problem in that, when an alkali detergent or the like adheres to the surface of the printed images formed using the ink-jet recording ink, floating and bleeding are caused on the printed surface.

The scratch resistance and the durability such as alkali resistance, and the ink dischargeability are in a tradeoff relationship. Therefore, when the scratch resistance and durability are improved, the ink dischargeability considerably degrades and thus the above ink-jet recording ink sometimes cannot be used as an ink-jet printing ink.

As described above, an ink-jet printing ink that has excellent scratch resistance, high durability such as alkali resistance, and good ink dischargeability and that can form a printed image with high gloss has been demanded from the industrial world. However, such an ink-jet printing ink and a binder for ink-jet printing ink that can be used for the production of the ink-jet printing ink have not been found yet.

US 2010/273930 A1 describes a coating agent characterized by comprising: core-shell-type resin particles (A) each having a shell layer and a core layer; a compound (B) having at least one selected from the group consisting of a hydrolysable silyl group and a silanol group and also having an epoxy group; and an aqueous medium, wherein the shell layer comprises (a1) a urethane resin with 2000 to 5500 mmol/kg of an aliphatic cyclic structure and at least one selected from the group consisting of a carboxyl group and a carboxylate group and the core layer comprises (a2) a vinyl polymer having a basic nitrogen-atom-containing group. Further disclosed are a coating agent for a plastic base material and a coating agent for a metallic base material.

KR 2010 0121244 A describes a waterborne urethane-acylate resin with a waterborne urethane resin and a core/shell structure, which is provided to secure the work stability of the resin compare to a conventional oily resin. The waterborne urethane-acylate resin contains the following: isocyanate with more than two average functionality number; hydrophilic polyol with more than two average functionality number; and polycarbonate diol marked with chemical formula 1: HO-[$R^1$-$OCO_2$-]$_n$-$R^1$-OH. In the chemical formula 1, $R^1$ is a $C_6$-$C_8$ linear alkylene group, a $C_6$-$C_8$ branched alkylene group, a $C_6$-$C_8$ cyclic alkylene group, a $C_4$-$C_6$ alkyl $C_6$-$C_8$ alicyclic type alkylene group, or -$CH_2$-$R^2$-$CH_2$-.

JP 2000 351805 A relates to the problem to provide a preparation process of a composite resin emulsion of a polyurethane and an ethylenically unsaturated monomer polymer which has an excellent dispersion stability and yields a coated film, etc., showing an excellent transparency, solvent resistance, flexibility, mechanical properties, wear resistance, weather resistance, flexing resistance, hydrolysis resistance, etc. As a solution to the problem, the document describes that, in the presence of 100 pts. wt. polyurethane in a polyurethane emulsion which satisfies the following conditions (1)-(4), from 10 to 90 pts. wt. ethylenically unsaturated monomer is emulsion polymerized to prepare a composite resin emulsion:(1) The emulsion is prepared by allowing an isocyanate- terminated urethane prepolymer to react with a chain extender in an aqueous solution in the presence of a surfactant, (2) the polyurethane has from 1 to 20 mmol ethylenically unsaturated group per 100 g polyurethane, (3) the polyurethane has from 3 to 30 mmol neutralized carboxyl group and/or sulfonate group per 100 g polyurethane, (4) the emulsion contains from 0.5 to 10 g surfactant per 100 g polyurethane.

US 2009/020036 A1 describes a latex particle for use in ink-jet inks, which can comprise a latex polymer core and a latex polymer shell such that the latex polymer shell has a Tg that is at least 10 °C greater than the Tg of the latex polymer core. The latex polymer core can comprise at least one polymerized core monomer. The latex polymer shell can comprise at least two polymerized shell monomers including a urethane acrylate monomer.

JP 2010 229310 A relates to the problem to provide a binder for an inkjet ink usable for ink capable of forming a printed image having extremely high-level abrasion-resistant and high gloss, and ink for inkjet printing including the binder. As a solution to the problem, the document describes a binder for inkjet ink which contains: a composite resin (A) in which a hydrophilic group-containing polyurethane (a1) and a vinyl polymer (a2) is linked through a polysiloxane (a3); and an aqueous medium.

JP 2002 256184 A relates to the problem to provide an ink for ink jet recording exhibiting sufficient fixing properties to a medium to be recorded, imparting fastness such as weather resistance, water resistance and the like to a recorded matter, realizing an excellent image almost free from bleeding and further having delivering stability enough to hardly cause clogging in a nozzle and the like. As a solution to the problem, the document describes an ink for ink jet recording which is composed of at least a pigment, a polymer emulsion, a substance of general formula I: $R^1$-$P_m$-$(CH_2CH_2O)_n$-$R^2$ (wherein $R^1$ and $R^2$ are the same or different and are each a hydrophobic group; P is a urethane; m and n are each the average value of the recurring units in the whole system; the sequence of P and $(CH_2CH_2O)$ is not limited so far as they are present in the molecule and can be present each in a block or at random) and water.

JP H06 1940 A relates to the problem to provide a water-base coating composition usable as a laminating ink for a food-packaging material requiring high lamination strength, boil resistance and retort resistance. As a solution to the problem, the document describes a water-base coating composition which contains a colorant, a carboxyl-containing water-base resin and a core-shell-type water-dispersible resin containing an epoxy-containing copolymer as the core and a carboxyl-containing polyurethane as the shell.

Citation List

Patent Literature

PTL 1: Japanese Unexamined Patent Application Publication No. 2000-1639

Summary of Invention

Technical Problem

Accordingly, it is an object of the present invention to provide a method for producing a binder for ink-jet printing ink that achieves excellent scratch resistance, high durability such as alkali resistance, and good ink dischargeability and that can form a printed image with high gloss and an ink-jet printing ink containing the binder.

Solution to Problem

As a result of conducting studies on a binder for ink-jet printing ink that uses an aqueous urethane resin as a base to solve the above problems, the inventors of the present invention have considered that it may be effective to use vinyl polymers such as a (meth)acrylic polymer in a combined manner to improve the durability such as alkali resistance.

Specifically, the inventors of the present invention have studied a binder for ink-jet printing ink in which composite resin particles formed by bonding the urethane resin and a vinyl polymer are dispersed in an aqueous medium.

However, the binder for ink-jet printing ink containing composite resin particles formed by bonding the urethane resin and a vinyl polymer sometimes degrades the ink dischargeability.

Therefore, the inventors of the present invention have conducted studies on composite resin particles formed without forming a chemical bond, specifically, a covalent bond between the urethane resin and the vinyl polymer.

As a result, they have found that an ink obtained by using a binder for ink-jet printing ink in which the vinyl polymer is stably dispersed in an aqueous medium by a urethane resin having a hydrophilic group can provide excellent scratch resistance, high durability such as alkali resistance, and good ink dischargeability and can provide a printed image with high gloss.

The inventors of the present invention also have found that, when a urethane resin for forming the composite resin, the urethane resin preferably containing an alicyclic structure in the range of 900 mmol/kg to 5500 mmol/kg and more preferably containing an alicyclic structure derived from an alicyclic structure-containing polyol (a1-2) in the range of 50 mmol/kg to 5500 mmol/kg relative to the total amount of the urethane resin (A), is used, the alkali resistance and alcohol resistance of printed images can be further improved.

The present invention relates to a method for producing a binder for ink-jet printing ink that includes a vinyl polymer (B) dispersed in an aqueous medium (D) by a urethane resin (A) having a hydrophilic group.

More specifically, the present invention provides the method for producing a binder for ink-jet printing ink as defined in claim 1.

Advantageous Effects of Invention

According to the ink-jet printing ink containing the binder for ink-jet printing ink produced by the method of the present invention, even if strong external forces are exerted, very fine printed images can be maintained without causing, for example, the detachment of pigments and high scratch resistance and high alkali resistance substantially equivalent to those of film photos can be provided. Furthermore, when the content of an alicyclic structure is within a particular range, high alcohol resistance can also be provided. Therefore, for example, printed matter formed by ink-jet photo printing or ink-jet high-speed printing can be used in various scenes such as outdoor advertisement.

Description of Embodiments

A binder for ink-jet printing ink produced by the method of the present invention includes a vinyl polymer (B) dispersed in an aqueous medium (D) by a urethane resin (A) having a hydrophilic group.

The urethane resin (A) and the vinyl polymer (B) are not present in a state in which they independently form resin particles and are dispersed in the aqueous medium (D), but are present in a state in which the vinyl polymer (B) is dispersed in the aqueous medium (D) by the urethane resin (A) having a hydrophilic group. Specifically, part or the entirety of the vinyl polymer (B) is contained in particles of the urethane resin (A) having a hydrophilic group to form composite resin particles (C).

The composite resin particles (C) are obtained by dispersing part or the entirety of the vinyl polymer (B) in the particles of the urethane resin (A) so that the vinyl polymer (B) is present in the form of a single particle or a plurality of particles. The composite resin particles (C) are preferably core-shell type particles in which the vinyl polymer (B) forms a core layer and the urethane resin (A) forms a shell layer.

In the composite resin particles (C), the entirety of the vinyl polymer (B) is preferably, but is not necessarily, contained in the particles of the urethane resin (A). Part of the vinyl polymer (B) may be present in an outermost portion of the composite resin particles (C) as long as, for example, high storage stability of the binder for ink-jet printing ink and high discharge stability of ink are not impaired. About 0.1% to 30% by mass of the vinyl polymer (B) relative to the total amount of the vinyl polymer (B) may be present in the outermost portion of the composite resin particles (C).

Specifically, when a vinyl polymer having a hydrophilic group as defined in claim 1 is used as the vinyl polymer (B), part of the vinyl polymer (B) may be present in the outermost portion of the composite resin particles to make contributions to an improvement in the dispersion stability of the composite resin particles (C) in the aqueous medium (D) .

In a binder for ink-jet printing ink in which the urethane resin (A) and the vinyl polymer (B) do not form composite resin particles and are independently dispersed in the aqueous medium (D), the clogging of ink discharge nozzles and the degradation of scratch resistance and alkali resistance of printed images may be caused, for example.

The binder for ink-jet printing ink produced by the method of the present invention includes the composite resin particles (C), but does not exclude particles of the urethane resin (A) and particles of the vinyl polymer (B) that are each independently present without forming the composite resin particles (C). Therefore, the binder for ink-jet printing ink produced by the method of the present invention may contain particles of the urethane resin (A) and particles of the vinyl polymer (B), in addition to the composite resin particles (C) serving as an essential component, as long as the advantageous effects of the present invention are not impaired.

In the composite resin particles (C), the urethane resin (A) and the vinyl polymer (B) are preferably not chemically bonded to each other. The chemical bond herein means a covalent bond between the urethane resin (A) and the vinyl polymer (B). The composite resin particles (C) formed without covalently bonding the urethane resin (A) and the vinyl polymer (B) are preferably used in order to further improve the storage stability of the binder for ink-jet printing ink produced by the method of the present invention and provide good ink dischargeability, high scratch resistance, and high durability such as alkali resistance.

The composite resin particles (C) preferably have an average particle size of 10 to 350 nm from the viewpoint of maintaining high storage stability of the binder for ink-jet printing ink and the ink dischargeability.

The mass ratio [(A)/(B)] of the urethane resin (A) to the vinyl polymer (B) is preferably in the range of 1/99 to 99/1, more preferably in the range of 10/90 to 90/10, and particularly preferably in the range of 45/55 to 80/20 in order to produce a binder for ink-jet printing ink that can form sharp printed matter having high scratch resistance without impairing high discharge stability of ink.

In the binder for ink-jet printing ink produced by the method of the present invention, the total content of the urethane resin (A) and the vinyl polymer (B) is preferably 10% to 50% by mass and more preferably 15% to 40% by mass relative to the total amount of the binder for ink-jet printing ink in order to achieve both good ink dischargeability and high scratch resistance and high durability of printed matter.

First, the urethane resin (A) used in the present invention will be described.

The urethane resin (A) has a hydrophilic group as defined in claim 1 and provides water dispersibility to the vinyl polymer (B), and is an essential component for producing the binder for ink-jet printing ink according to the present invention that can be used for an ink allowing the formation of printed images having excellent scratch resistance and high durability such as alkali resistance.

Various urethane resins can be used as the urethane resin (A). For example, the urethane resin (A) preferably has a weight-average molecular weight of 3,000 to 150,000 and more preferably 15,000 to 70,000 in order to provide an ink-jet printing ink that has high storage stability and good ink dischargeability and can form printed images having high scratch resistance and high durability such as alkali resistance.

The urethane resin (A) needs to have a hydrophilic group from the viewpoint of providing the water dispersibility to the vinyl polymer (B).

More specifically , a carboxylate group obtained by partly or entirely performing neutralization with a basic compound as defined in claim 1 is used in order to maintain good water dispersibility.

The basic compound that is used for the neutralization of the carboxyl group serving as the hydrophilic group is potassium hydroxide or an aqueous solution of the potassium hydroxide in order to provide environmentally-friendly products.

The hydrophilic group is preferably present in the range of 150 mmol/kg to 1500 mmol/kg relative to the total amount of the urethane resin (A) in order to provide better water dispersibility and maintain high discharge stability of ink. The hydrophilic group is more preferably present in the range of 350 mmol/kg to 1200 mmol/kg.

The urethane resin (A) preferably has an acid value of 10 to 80 and more preferably 20 to 65 in order to achieve both high discharge stability of ink and high scratch resistance of printed images.

The urethane resin (A) preferably has an alicyclic structure in order to achieve high discharge stability of ink and high scratch resistance and form printed images having high alkali resistance and alcohol resistance.

Examples of the alicyclic structure that can be used include a cyclobutyl ring, a cyclopentyl ring, a cyclohexyl ring, a cycloheptyl ring, a cyclooctyl ring, a propylcyclohexyl ring, a tricyclo[5.2.1.0.2.6]decyl skeleton, a bicyclo[4.3.0]-nonyl skeleton, a tricyclo[5.3.1.1]dodecyl skeleton, a propyltricyclo[5.3.1.1]dodecyl skeleton, a norbornene skeleton, an isobornyl skeleton, a dicyclopentanyl skeleton, and an adamantyl skeleton. Among them, a cyclohexyl ring structure is preferred.

The alicyclic structure is preferably present in the range of 900 mmol/kg to 5500 mmol/kg relative to the total mass of the urethane resin (A) in order to achieve both high scratch resistance and alkali resistance and high discharge stability of ink. The alicyclic structure is particularly preferably present in the range of 1600 mmol/kg to 3500 mmol/kg.

The alicyclic structure preferably includes an alicyclic structure derived from an alicyclic structure-containing polyol that can be used as a polyol (a1) in the production of the urethane resin (A), in order to produce a binder for ink-jet printing ink that can form printed images having high scratch resistance and high chemical resistance such as alkali resistance or alcohol resistance.

The alicyclic structure derived from an alicyclic structure-containing polyol is preferably used in the range of 50 mmol/kg to 5500 mmol/kg relative to the total amount of the urethane resin (A) in order to produce a binder for ink-jet printing ink that can form printed images having excellent scratch resistance, high alkali resistance, and high alcohol resistance. The alicyclic structure derived from an alicyclic structure-containing polyol is more preferably used in the range of 200 mmol/kg to 4500 mmol/kg and particularly preferably in the range of 200 mmol/kg to 3500 mmol/kg.

All the alicyclic structure that may be contained in the urethane resin (A) in the range of 900 mmol/kg to 5500 mmol/kg is not necessarily the alicyclic structure derived from an alicyclic structure-containing polyol. Part of the alicyclic structure may be the alicyclic structure derived from an alicyclic structure-containing polyisocyanate such as isophorone isocyanate.

In the present invention, the ratio of the alicyclic structure contained in the urethane resin (A) relative to the total mass of the urethane resin (A) is calculated on the basis of the total mass of all raw materials such as a polyol (a1) and a polyisocyanate (a2) used in the production of the urethane resin (A) and the amount of substance of the alicyclic structure contained in the alicyclic structure-containing compound used in the production of the urethane resin (A).

A urethane resin obtained, for example, by a reaction of the polyol (a1) and polyisocyanate (a2) can be used as the urethane resin (A). The hydrophilic group in the urethane resin (A) can be introduced into the urethane resin (A), for example, by using a hydrophilic group-containing polyol as one of components that constitute the polyol (a1).

For example, the hydrophilic group-containing polyol (a1-1) can be used as the polyol (a1) that can be used in the production of the urethane resin (A). If necessary, the hydrophilic group-containing polyol (a1-1) and other polyols may be used in combination.

Examples of the hydrophilic group-containing polyol (a1-1) that can be used include polyols having a carboxyl group, such as 2,2'-dimethylolpropionic acid, 2,2'-dimethylolbutanoic acid, 2,2'-dimethylolbutyric acid, and 2,2'-dimethylolvaleric acid; and polyols having a sulfonic acid group, such as 5-sulfoisophthalic acid, sulfoterephthalic acid, 4-sulfophthalic acid, and 5-[4-sulfophenoxy]isophthalic acid. It is also possible to use, as the hydrophilic group-containing polyol, for example, hydrophilic group-containing polyester polyols obtained by a reaction of the above low-molecular-weight hydrophilic group-containing polyol and a polycarboxylic acid such as adipic acid. In any case, the urethane resin (A) must have a hydrophilic group as defined in claim 1.

The hydrophilic group-containing polyol (a1-1) is preferably used in the range of 1% to 50% by mass relative to the total amount of the polyol (a1) from the viewpoint of providing good water dispersion stability to the urethane resin (A). The hydrophilic group-containing polyol (a1-1) is more preferably used in the range of 3% to 20% by mass and particularly preferably in the range of 3% to 15% by mass from the viewpoint of achieving both the water dispersion stability and high scratch resistance.

Other polyols that can be used in combination with the hydrophilic group-containing polyol (a1-1) can be suitably used in accordance with the characteristics required for the binder for ink-jet printing ink.

Examples of other polyols that can be used for the polyol (a1) include a polyether polyol (a1-2), a polycarbonate polyol, and a polyester polyol.

Among them, the polyether polyol (a1-2) or polycarbonate polyol is preferably used in combination with the hydrophilic group-containing polyol because high storage stability of ink and good ink dischargeability can be provided to the binder for ink-jet printing ink.

A polyether polyol obtained, for example, by addition polymerization of an alkylene oxide using, as an initiator, at least one compound having two or more active hydrogen atoms can be used as the polyether polyol (a1-2).

Examples of the initiator that can be used include ethylene glycol, diethylene glycol, triethylene glycol, propylene glycol, trimethylene glycol, 1,3-butanediol, 1,4-butanediol, 1,6-hexanediol, glycerol, trimethylolethane, and trimethylolpropane.

Examples of the alkylene oxide that can be used include ethylene oxide, propylene oxide, butylene oxide, styrene oxide, epichlorohydrin, and tetrahydrofuran.

Polyoxytetramethylene glycol or polyoxypropylene glycol is preferably used as the polyether polyol (a1-2) from the viewpoint of producing a binder for ink-jet printing ink that can provide excellent scratch resistance.

The polyoxytetramethylene glycol is obtained, for example, by ring-opening polymerization of tetrahydrofuran. In the present invention, the number-average molecular weight of the polyoxytetramethylene glycol is preferably 500 to 5,000 and more preferably 500 to 3,500 in order to achieve both high storage stability of ink and high scratch resistance of printed images.

Examples of the polycarbonate polyol that can be used in the production of the urethane resin (A) include polycarbonate polyols obtained by a reaction of a carbonic acid ester and a polyol, and polycarbonate polyols obtained by a reaction of phosgene and bisphenol A or another compound.

Examples of the carbonic acid ester that can be used include methyl carbonate, dimethyl carbonate, ethyl carbonate, diethyl carbonate, cyclocarbonate, and diphenyl carbonate.

Examples of the polyol that can react with the carbonic acid ester include dihydroxy compounds having a relatively low molecular weight, such as ethylene glycol, diethylene glycol, triethylene glycol, 1,2-propylene glycol, 1,3-propylene glycol, dipropylene glycol, 1,4-butanediol, 1,3-butanediol, 1,2-butanediol, 2,3-butanediol, 1,5-pentanediol, 1,5-hexanediol, 2,5-hexanediol, 1,6-hexanediol, 1,7-heptanediol, 1,8-octanediol, 1,9-nonanediol, 1,10-decanediol, 1,11-undecanediol, 1,12-dodecanediol, 1,4-cyclohexanediol, 1,4-cyclohexanedimethanol, hydroquinone, resorcin, bisphenol A, bisphenol F, and 4,4'-biphenol; polyether polyols such as polyethylene glycol, polypropylene glycol, and polyoxytetramethylene glycol; and polyester polyols such as polyhexamethylene adipate, polyhexamethylene succinate, and polycaprolactone.

Examples of the polyester polyol that can be used include a product obtained by an esterification reaction of a low-molecular-weight polyol and polycarboxylic acid, a polyester obtained by a ring-opening polymerization reaction of a cyclic ester compound such as ε-caprolactone, and a copolymer polyester of the foregoing.

Examples of the low-molecular-weight polyol that can be used include ethylene glycol and propylene glycol.

Examples of the polycarboxylic acid that can be used include succinic acid, adipic acid, sebacic acid, dodecanedicarboxylic acid, terephthalic acid, isophthalic acid, phthalic acid, anhydrides thereof, and ester-forming derivatives thereof.

Regarding the other polyols, for example, an alicyclic structure-containing polyol such as cyclohexanediol or an aromatic ring structure-containing polyol may be used in combination with the above-described various polyols.

The other polyols are preferably used in the range of 50% to 95% by mass and more preferably in the range of 80% to 95% by mass relative to the total amount of the polyol (a1) that can be used in the production of the urethane resin (A) in order to achieve both good water dispersion stability and high scratch resistance. In particular, the polyether polyol such as polyoxytetramethylene glycol or the polycarbonate polyol is preferably used in the range of 30% to 90% by mass and more preferably in the range of 40% to 90% by mass relative to the total amount of the polyol (a1) that can be used in the production of the urethane resin (A) in order to achieve both good water dispersion stability and high scratch resistance.

When a urethane resin having an alicyclic structure is used as the urethane resin (A), an alicyclic structure-containing polyol (a1-3) can be used as the other polyols.

Examples of the alicyclic structure-containing polyol (a1-3) that can be used include alicyclic structure-containing polyols having a low molecular weight of about 100 to 500, such as cyclobutanediol, cyclopentanediol, 1,4-cyclohexanediol, cycloheptanediol, cyclooctanediol, 1,4-cyclohexanedimethanol, hydroxypropylcyclohexanol, tricyclo[5.2.1.0.2.6]decane-dimethanol, bicyclo[4.3.0]-nonanediol, dicyclohexanediol, tricyclo[5.3.1.1]dodecanediol, bicyclo[4.3.0]nonanedimethanol, tricyclo[5.3.1.1]dodecane-diethanol, hydroxypropyltricyclo[5.3.1.1]dodecanol, spiro[3.4]octanediol, butylcyclohexanediol, 1,1'-bicyclohexylidenediol, cyclohexanetriol, hydrogenated bisphenol A, and 1,3-adamantanediol. Note that the molecular weight of the alicyclic structure-containing polyol is based on the formula weight.

An alicyclic structure-containing polycarbonate polyol, an alicyclic structure-containing polyester polyol, an alicyclic structure-containing polyether polyol, and the like obtained by a reaction of the alicyclic structure-containing polyol having a low molecular weight and other components can be used alone or in combination as the alicyclic structure-containing polyol (a1-3).

An example of the alicyclic structure-containing polycarbonate polyol that can be used is a product obtained by a reaction of the alicyclic structure-containing polyol having a low molecular weight with dimethyl carbonate, phosgene, or the like.

The alicyclic structure-containing polycarbonate polyol preferably has a number-average molecular weight of 800 to 3,000 and more preferably has a number-average molecular weight of 800 to 2,000.

An example of the alicyclic structure-containing polyester polyol that can be used is a product obtained by an esterification reaction of the alicyclic structure-containing polyol having a low molecular weight with polycarboxylic acid.

An example of the alicyclic structure-containing polyether polyol that can be used is a product obtained by addition polymerization of an alkylene oxide such as ethylene oxide or propylene oxide using the alicyclic structure-containing polyol having a low molecular weight as an initiator.

An alicyclic structure-containing polyol having a molecular weight of 100 to 500 or an alicyclic structure-containing polycarbonate polyol having a number-average molecular weight of 800 to 3,000 is preferably used as the alicyclic structure-containing polyol (a1-3) in order to provide excellent scratch resistance and alkali resistance. More specifically, 1,4-cyclohexanedimethanol is preferably used as the alicyclic structure-containing polyol. A polycarbonate polyol obtained by a reaction of 1,4-cyclohexanedimethanol or 1,6-hexanediol with dimethyl carbonate, phosgene, or the like is also preferably used as the alicyclic structure-containing polycarbonate polyol. Furthermore, the 1,4-cyclohexanedimethanol and the polycarbonate polyol are preferably used in combination.

The alicyclic structure-containing polyol (a1-3) is preferably used in the range of 1% to 60% by mass relative to the total amount of the polyol (a1) in order to form printed images having, for example, high scratch resistance, high alkali resistance, and high alcohol resistance. The alicyclic structure-containing polyol (a1-3) is more preferably used in the range of 1% to 40% by mass and particularly preferably in the range of 1% to 20% by mass from the viewpoint of achieving both the water dispersion stability and high scratch resistance.

Examples of the polyisocyanate (a2) used in the production of the urethane resin (A) include aromatic diisocyanates such as phenylene diisocyanate, tolylene diisocyanate, diphenylmethane diisocyanate, and naphthalene diisocyanate; aliphatic diisocyanates and alicyclic structure-containing diisocyanates, such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, and 2,2,4-trimethylhexamethylene diisocyanate. These diisocyanates may be used alone or in combination of two or more. Among them, an aliphatic diisocyanate or an alicyclic structure-containing diisocyanate is preferably used because the discharge stability of ink can be improved.

The urethane resin (A) may optionally have a functional group that reacts with part of the vinyl polymer (A), such as a hydrolysable silyl group, a silanol group, an amino group, an imino group, or a hydroxyl group as long as the advantageous effects of the present invention are not impaired. However, as described above, the urethane resin (A) and the vinyl polymer (B) preferably form the composite resin particles (C) without substantially being covalently bonded to each other, from the viewpoint of maintaining high storage stability of the binder for ink-jet printing ink and the ink dischargeability. Therefore, the urethane resin (A) preferably has no functional groups that react with the vinyl polymer (B).

The vinyl polymer (B) will now be described.

The vinyl polymer (B) is an essential component for producing an ink that can form printed images having high durability such as alkali resistance.

The vinyl polymer (B) by itself is not easily dispersed in the aqueous medium (D) in a stable manner. Therefore, by using the urethane resin (A) having a hydrophilic group, the vinyl polymer (B) can be dispersed in the aqueous medium (D) in a stable manner. Specifically, composite resin particles (C) are formed by incorporating part or the entirety of the vinyl polymer (B) into particles of the urethane resin (A). Therefore, a vinyl polymer not having a hydrophilic group such as the above-described anionic group or cationic group or a vinyl polymer having a hydrophilic group in such an amount that particles of the vinyl polymer (B) are not formed independently from the urethane resin (A) is preferably used as the vinyl polymer (B).

The vinyl polymer (B) preferably has a number-average molecular weight of 100,000 to 2,000,000 in order to achieve both high scratch resistance and high durability such as alkali resistance of printed images and good ink dischargeability.

A product obtained by polymerizing a known vinyl monomer (b1) or a mixture of the known vinyl monomers (b1) can be used as the vinyl polymer (B).

Examples of the vinyl monomer (b1) that can be used in the production of the vinyl polymer (B) include (meth)acrylic monomers such as (meth)acrylic acid alkyl esters and (meth)acrylic acid, styrene, and butadiene. Among them, a (meth)acrylic acid alkyl ester is preferably used in order to provide good ink dischargeability.

Examples of the (meth)acrylic acid alkyl ester that can be used include methyl (meth)acrylate, ethyl (meth)acrylate, n-butyl (meth)acrylate, i-butyl (meth)acrylate, t-butyl (meth)acrylate, 2-ethylhexyl (meth)acrylate, hexyl (meth)acrylate, cyclohexyl (meth)acrylate, octyl (meth)acrylate, nonyl (meth)acrylate, dodecyl (meth)acrylate, stearyl (meth)acrylate, isobornyl (meth)acrylate, dicyclopentanyl (meth)acrylate, phenyl (meth)acrylate, and benzyl (meth)acrylate. Among them, a (meth)acrylic acid alkyl ester having an alkyl group with 1 to 6 carbon atoms is preferably used. More preferably, methyl (meth)acrylate and n-butyl (meth)acrylate are used in combination in order to achieve both high scratch resistance and high durability such as alkali resistance of printed images and good ink dischargeability.

The (meth)acrylic acid alkyl ester is preferably used in the range of 70% by mass or more, more preferably 80% by mass or more, and particularly preferably 90% by mass or more relative to the total mass of the vinyl monomer (b1) used in the production of the vinyl polymer (B) in order to provide good ink dischargeability.

Specifically, a (meth)acrylic acid alkyl ester that can form a homopolymer with the range of -50°C to 0°C and a (meth)acrylic acid alkyl ester that can form a homopolymer with the range of 50°C to 120°C can be used in a combined manner as the above (meth)acrylic acid alkyl ester. In this case, the mass ratio [(meth)acrylic acid alkyl ester that can form a homopolymer with the range of -50°C to 0°C/(meth)acrylic acid alkyl ester that can form a homopolymer with the range of 50°C to 120°C] is preferably in the range of 100/0 to 25/75 in order to improve the ink dischargeability and the durability of printed matter.

For example, n-butyl (meth)acrylate can be used as the (meth)acrylic acid alkyl ester that can form a homopolymer with the range of -50°C to 0°C. For example, methyl (meth)acrylate can be used as the (meth)acrylic acid alkyl ester that can form a homopolymer with the range of 50°C to 120°C.

A vinyl monomer having a carboxyl group can be used as the vinyl monomer (b1) in such an amount that the composite resin particles (C) can be formed. Examples of the vinyl monomer (b1) that can be used include (meth)acrylic acid, β-carboxyethyl (meth)acrylate, 2-(meth)acryloylpropionic acid, crotonic acid, itaconic acid-half ester, maleic acid-half ester, and β-(meth)acryloyloxyethyl hydrogen succinate. An example of the vinyl monomer having a carboxyl group is ARONIX M-5300 (ω-carboxy-polycaprolactone monoacrylate manufactured by TOAGOSEI CO., LTD.).

When the vinyl monomer having a carboxyl group is used, the vinyl monomer having a carboxyl group is preferably used in the range of 0.1% to 85% by mass relative to the total amount of the vinyl monomer (b1) used in the formation of the composite resin particles (C).

Examples of the vinyl monomer (b1) that can be used include, in addition to the above vinyl monomers (b1), 2-hydroxyethyl (meth)acrylate, 2-hydroxypropyl (meth)acrylate, polyethylene glycol mono(meth)acrylate, glycerol mono(meth)acrylate, dicyclopentanyl (meth)acrylate, phenyl (meth)acrylate, benzyl (meth)acrylate, 2,2,2-trifluoroethyl (meth)acrylate, 2,2,3,3-pentafluoropropyl (meth)acrylate, perfluorocyclohexyl (meth)acrylate, 2,2,3,3-tetrafluoropropyl (meth)acrylate, β-(perfluorooctyl)ethyl (meth)acrylate, (meth)acrylamide, N-methylol(meth)acrylamide, N-isopropoxymethyl(meth)acrylamide, N-butoxymethyl(meth)acrylamide, N-isobutoxymethyl(meth)acrylamide, diacetone(meth)acrylamide, N-monoalkyl(meth)acrylamide, N,N-dialkyl(meth)acrylamide, styrene, α-methylstyrene, vinyl acetate, vinyl propionate, vinyl butyrate, vinyl versatate, methyl vinyl ether, ethyl vinyl ether, propyl vinyl ether, butyl vinyl ether, amyl vinyl ether, hexyl vinyl ether, (meth)acrylonitrile, vinyl toluene, vinylanisole, α-halostyrene, vinyl naphthalene, divinylstyrene, isoprene, chloroprene, butadiene, ethylene, tetrafluoroethylene, vinylidene fluoride, and N-vinylpyrrolidone.

In addition to the above-described vinyl monomers, a vinyl monomer having a cross-linkable functional group can also be used as the other vinyl monomers.

Examples of the vinyl monomer having a cross-linkable functional group include polymerizable monomers having a glycidyl group, such as glycidyl (meth)acrylate and allyl glycidyl ether; polymerizable monomers having an amino group, such as aminoethyl (meth)acrylate, N-monoalkylaminoalkyl (meth)acrylate, and N,N-dialkylaminoalkyl (meth)acrylate; polymerizable monomers having a silyl group, such as vinyltrichlorosilane, vinyltrimethoxysilane, vinyltriethoxysilane, vinyltris(β-methoxyethoxy)silane, γ-(meth)acryloxypropyltrimethoxysilane, γ-(meth)acryloxypropyltriethoxysilane, γ-(meth)acryloxypropylmethyldimethoxysilane, γ-(meth)acryloxypropylmethyldiethoxysilane, γ-(meth)acryloxypropyltriisopropoxysilane, N-β-(N-vinylbenzylaminoethyl)-γ-aminopropyltrimethoxysilane, and hydrochlorides thereof; polymerizable monomers having an aziridinyl group, such as 2-aziridinylethyl (meth)acrylate; polymerizable monomers having an isocyanate group and/or a blocked isocyanate group, such as (meth)acryloyl isocyanate and a phenol or methyl ethyl ketoxime adduct of ethyl (meth)acryloyl isocyanate; polymerizable monomers having an oxazoline group, such as 2-isopropenyl-2-oxazoline and 2-vinyl-2-oxazoline; polymerizable monomers having a cyclopentenyl group, such as dicyclopentenyl (meth)acrylate; polymerizable monomers having an allyl group, such as allyl (meth)acrylate; vinyl monomers having a carbonyl group, such as acrolein; and vinyl monomers having an acetoacetyl group, such as acetoacetoxyethyl (meth)acrylamide.

The method for producing a binder for ink-jet printing ink according to the present invention will now be described.

The binder for ink-jet printing ink is produced by the following [method 2] because the ink dischargeability can be further improved. In view of the improvement in the production efficiency of the binder for ink-jet printing ink, a binder can also be produced by the following [method 1], which is not according to the invention, however, and only described for reference or comparison.

The [method 1] includes a step (i) of producing a urethane resin composition in which particles of a urethane resin (A) obtained by a reaction of a polyol (a1) and a polyisocyanate (a2) are dispersed in an aqueous medium (D) and a step (ii) of mixing the urethane resin composition, a vinyl monomer (b1), and a polymerization initiator to cause a radical polymerization reaction.

Since part or the entirety of the vinyl monomer (b1) such as a (meth)acrylic acid alkyl ester and the polymerization initiator is not easily present in the aqueous medium (D) in a stable manner, they are easily localized in the particles of the urethane resin (A). The vinyl monomer (b1) is subjected to radical polymerization within the particles of the urethane resin (A) to form the vinyl polymer (B), whereby a binder for ink-jet printing ink that contains the aqueous medium (D) and the composite resin particles (C) in which part or the entirety of the vinyl polymer (B) is contained in particles of the urethane resin (A) having a hydrophilic group can be obtained.

In the step (i) of producing the urethane resin composition in which particles of the urethane resin (A) are dispersed in the aqueous medium (D), for example, a urethane resin is produced by a reaction of the polyol (a1) and the polyisocyanate (a2) without using a solvent or in the presence of an organic solvent, and then the urethane resin having a hydrophilic group which is partly or entirely neutralized when necessary is mixed into the aqueous medium (D) to achieve an aqueous state. The urethane resin composition can also be produced by mixing the urethane resin and a chain extender and causing a reaction, for example, after the neutralizing step or before or after the aqueous state-forming step.

The hydrophilic group in the urethane resin (A) is not necessarily neutralized, but is preferably neutralized from the viewpoint of improving the water dispersion stability. In particular, when the hydrophilic group is an anionic group such as a carboxyl group or a sulfuric acid group, part or the entirety of the hydrophilic group is preferably neutralized into a carboxylate group or a sulfonate group using the above-described basic compound from the viewpoint of further improving the water dispersion stability.

The urethane resin (A) and the aqueous medium (D) may be mixed by an emulsification method such as a forced emulsification method, a phase inversion emulsification method, a D-phase emulsification method, or a gel emulsification method, if necessary. Specifically, the mixing can be performed by single stirring that uses an impeller, a Disper, a homogenizer, or the like or combined stirring that uses the above devices in combination or with a sand mill, a multi-screw extruder, or the like.

In the reaction of the polyol (a1) and the polyisocyanate (a2), for example, the equivalent ratio of an isocyanate group in the polyisocyanate (a2) to a hydroxyl group in the polyol (a1) is preferably in the range of 0.8 to 2.5 and more preferably in the range of 0.9 to 1.5.

The reaction of the polyol (a1) and the polyisocyanate (a2) is preferably caused to proceed under stirring at a temperature of about 70°C to 200°C.

Examples of the organic solvent that can be used in the production of the urethane resin (A) include ketones such as acetone and methyl ethyl ketone; ethers such as tetrahydrofuran and dioxane; acetates such as ethyl acetate and butyl acetate; nitriles such as acetonitrile; and amides such as dimethylformamide and N-methylpyrrolidone. These organic solvents may be used alone or in combination of two or more. When the organic solvent is used, the organic solvent is preferably sufficiently removed in advance by distillation before the mixing with the vinyl monomer (b1) and the like.

The step (ii) is a step of mixing the urethane resin composition produced in the step (i), the vinyl monomer (b1), and a polymerization initiator to cause radical polymerization. Specifically, the urethane resin composition whose temperature is adjusted to, for example, about 40°C to 90°C, the vinyl monomer (b1), and a polymerization initiator are mixed with each other under stirring.

Examples of the polymerization initiator that can be used include radical polymerization initiators such as persulfates, organic peroxides, and hydrogen peroxide; and azo-based initiators such as 4,4'-azobis(4-cyanovaleric acid) and 2,2'-azobis(2-amidinopropane).

The radical polymerization initiator may be used together with a reducing agent described below so as to be a redox polymerization initiator.

Examples of the persulfates, which are typical polymerization initiators, include potassium persulfate, sodium persulfate, and ammonium persulfate. Examples of the organic peroxides include diacyl peroxides such as benzoyl peroxide, lauroyl peroxide, decanoyl peroxide; dialkyl peroxides such as t-butylcumyl peroxide and dicumyl peroxide; peroxyesters such as t-butyl peroxylaurate and t-butyl peroxybenzoate; and hydroperoxides such as cumene hydroperoxide, p-menthane hydroperoxide, and t-butyl hydroperoxide.

The [method 2] includes a step (iii) of producing a urethane resin (A) by a reaction of a polyol (a1), a polyisocyanate (a2), and optionally a chain extender without using a solvent or in the presence of an organic solvent; a step (iv) of producing a mixture by mixing the urethane resin (A) and the vinyl monomer (b1) without using a solvent or in the presence of an organic solvent; a step (v) of producing a composition containing an aqueous medium (D) and resin particles (C') in which part or the entirety of the vinyl monomer (b1) is contained in particles of the urethane resin (A) by mixing, with the aqueous medium (D), the urethane resin (A) in the mixture, the urethane resin (A) having a hydrophilic group neutralized as defined in claim 1; and a step (vi) of mixing the composition produced in the step (v) and a polymerization initiator to cause radical polymerization.

The step (iii) is a step of producing a urethane resin (A) by mixing a polyol (a1) and a polyisocyanate (a2) at a temperature of about 70°C to 200°C to cause a reaction. In the step (iii), a chain extender may be optionally used.

In the reaction of the polyol (a1) and the polyisocyanate (a2), for example, the equivalent ratio of an isocyanate group in the polyisocyanate (a2) to a hydroxyl group in the polyol (a1) is preferably in the range of 0.8 to 2.5 and more preferably in the range of 0.9 to 1.5.

The step (iv) is a step of producing a mixture by mixing the urethane resin (A) produced in the step (iii) and the vinyl monomer (b1) without using a solvent or in the presence of an organic solvent.

The mixing can be performed using a stirrer or the like at a temperature of about 60°C or less.

The step (v) is a step of mixing, with an aqueous medium (D), the urethane resin (A) having a hydrophilic group neutralized as defined in claim 1, the urethane resin (A) being in the mixture produced in the step (iv). Since part or the entirety of the vinyl monomer (b1) is not easily present in the aqueous medium (D) in a stable manner, the vinyl monomer (b1) is easily localized in the particles of the urethane resin (A). This allows the production of a composition containing the aqueous medium (D) and resin particles (C') in which part or the entirety of the vinyl monomer (b1) is contained in particles of the urethane resin (A) .

The hydrophilic group in the urethane resin (A) is neutralized from the viewpoint of improving the water dispersion stability. In particular, the hydrophilic group is a carboxyl group, part or the entirety of which is neutralized into a carboxylate group using the above-described basic compound from the viewpoint of further improving the water dispersion stability.

The urethane resin (A) and the aqueous medium (D) may be mixed by an emulsification method such as a forced emulsification method, a phase inversion emulsification method, a D-phase emulsification method, or a gel emulsification method, if necessary. Specifically, the mixing can be performed by single stirring that uses an impeller, a Disper, a homogenizer, or the like or combined stirring that uses the above devices in combination or with a sand mill, a multi-screw extruder, or the like.

The step (vi) is a step of mixing the composition produced in the step (v) and a polymerization initiator. Thus, radical polymerization of the vinyl monomer (b1) proceeds, which can provide a binder for ink-jet printing ink that contains the aqueous medium (D) and composite resin particles (C) in which part or the entirety of the vinyl polymer (B) is contained in particles of the urethane resin (A) having a hydrophilic group.

The radical polymerization of the vinyl monomer (b1) can be performed, for example, at a temperature of about 40°C to 90°C. The polymerization initiators that can be used in the step (ii) can also be used as the above polymerization initiator.

An aqueous medium (D) used in the present invention will now be described.

The aqueous medium (D) is used as a solvent of the composite resin particles (C) constituted by the urethane resin (A) and the vinyl polymer (B). The aqueous medium (D) may be water, an organic solvent miscible with water, or a mixture thereof. Examples of the organic solvent miscible with water include alcohols such as methanol, ethanol, n-propanol, and isopropanol; ketones such as acetone and methyl ethyl ketone; polyalkylene glycols such as ethylene glycol, diethylene glycol, and propylene glycol; alkyl ethers of a polyalkylene glycol; and lactams such as N-methyl-2-pyrrolidone. In the present invention, water may be used by itself, a mixture of water and an organic solvent miscible with water may be used, or an organic solvent miscible with water may be used by itself. Water by itself or a mixture of water and an organic solvent miscible with water is preferably used in view of the safety and the load on the environment. Water by itself is particularly preferably used.

The binder for ink-jet printing ink produced by the method of the present invention may optionally contain a curing agent or a curing catalyst as long as the storage stability and ink dischargeability are not impaired.

Examples of the curing agent that can be used include compounds having a silanol group and/or a hydrolyzable silyl group, polyepoxy compounds, polyoxazoline compounds, and polyisocyanates. Examples of the curing catalyst that can be used include lithium hydroxide, sodium hydroxide, and potassium hydroxide.

An ink-jet printing ink containing the binder produced by the method of the present invention will now be described.

The ink-jet printing ink contains the binder for ink-jet printing ink, a pigment or a dye, and optionally various additives.

A publicly known inorganic pigment or organic pigment can be used as the pigment.

Examples of the inorganic pigment that can be used include titanium oxide, antimony red, iron red, cadmium red, cadmium yellow, cobalt blue, Prussian blue, ultramarine blue, carbon black, and graphite.

Examples of the organic pigment that can be used include quinacridone pigments, quinacridonequinone pigments, dioxazine pigments, phthalocyanine pigments, anthrapyrimidine pigments, anthanthrone pigments, indanthrone pigments, flavanthrone pigments, perylene pigments, diketopyrrolopyrrole pigments, perinone pigments, quinophthalone pigments, anthraquinone pigments, thioindigo pigments, benzimidazolone pigments, and azo pigments.

These pigments may be used in combination of two or more. These pigments may be surface-treated and have self-dispersibility in an aqueous medium.

Examples of the dye that can be used include azo dyes such as monoazo and disazo, metal complex salts, naphthol dyes, anthraquinone dyes, indigo dyes, carbonium dyes, quinoimine dyes, cyanine dyes, quinoline dyes, nitro dyes, nitroso dyes, benzoquinone dyes, naphthoquinone dyes, naphthalimide dyes, perinone dyes, phthalocyanine dyes, and triallylmethanes.

Examples of the additives that can be used include a polymer dispersing agent, a viscosity modifier, a humectant, an antifoaming agent, a surfactant, a preservative, a pH adjusting agent, a chelating agent, a plasticizer, an ultraviolet absorber, an antioxidant, and an acrylic resin used in publicly known binders for ink-jet printing ink.

Examples of the polymer dispersing agent that can be used include random-type, block-type, or graft-type acrylic resins and styrene-acrylic resins. When the polymer dispersing agent is used, an acid or a base may be used together to neutralize the polymer dispersing agent.

The ink-jet printing ink can be produced, for example, by the following production method.

(1) A method for producing an ink by mixing the pigment or dye, the aqueous medium, the binder for ink-jet printing ink, and optionally the additives at one time using a dispersing device

(2) A method for producing an ink by mixing the pigment or dye, the aqueous medium, and optionally the additives using a dispersing device to prepare an ink precursor composed of an aqueous dispersion body of the pigment or dye and then mixing the ink precursor composed of an aqueous dispersion body of the pigment or dye, the binder for ink-jet printing ink, and optionally an aqueous medium and additives using a dispersing device

The ink precursor containing the pigment used in the ink production method (2) can be prepared, for example, by the following method.

(x) A method for preparing an ink precursor composed of an aqueous dispersion body containing a pigment by mixing a kneaded product and an aqueous medium using a dispersing device, the kneaded product being obtained by subjecting a pigment and additives such as a polymer dispersing agent to preliminary kneading using a twin roll or a mixer

(y) A method for preparing an ink precursor composed of an aqueous dispersion body containing a pigment by mixing a pigment and a polymer dispersing agent using a dispersing device, then depositing the polymer dispersing agent on a surface of the pigment through the control of the solubility of the polymer dispersing agent, and further mixing the pigment and the polymer dispersing agent using the dispersing device

(z) A method for preparing an ink precursor composed of an aqueous dispersion body containing a pigment by mixing a pigment and the additives using a dispersing device and then mixing the resultant mixture and a resin emulsion using the dispersing device

Examples of the dispersing device that can be used in the production of the ink-jet printing ink include an ultrasonic homogenizer, a high-pressure homogenizer, a paint shaker, a ball mill, a roll mill, a sand mill, a sand grinder, Dyno-Mill, Dispermat, SC Mill, and Nanomizer. These dispersing devices may be used alone or in combination of two or more.

Coarse particles having a particle size of about 250 nm or more may be present in the ink-jet printing ink produced by the above method. Such coarse particles may cause clogging of printer nozzles and degrade the ink dischargeability. Therefore, after the preparation of the aqueous dispersion body of the pigment or after the preparation of the ink, such coarse particles are preferably removed by, for example, centrifugation or filtration.

The obtained ink-jet printing ink preferably has a volume-average particle size of 200 nm or less. In particular, when a higher gloss image having a quality like a film photo quality is formed, the volume-average particle size is preferably in the range of 80 to 120 nm.

The ink-jet printing ink preferably contains 0.2% to 10% by mass in total of the composite resin particles (C), 50% to 95% by mass of the aqueous medium (D), and 0.5% to 15% by mass of the pigment relative to the total amount of the ink-jet printing ink.

The ink-jet printing ink containing the binder produced by the method of the present invention produced by the above method can be particularly used for ink-jet printing conducted with an ink-jet printer. For example, the ink-jet printing ink can be used for ink-jet printing on a substrate such as a paper sheet, a plastic film, a metal film, or a metal sheet. The ink-jet method is not particularly limited, but the ink-jet printing ink can be applied to printers of known types such as continuous ejection types (e.g., a charge control type and a spray type) and on-demand types (such as a piezoelectric type, a thermal type, and an electrostatic attraction type).

Printed matter formed using the above ink-jet printing ink has high scratch resistance and thus the degradation or the like of printed images due to detachment of pigments is not easily caused. The printed matter also has high alkali resistance and thus bleeding or the like due to adhesion of an alkali detergent or the like to the surface of printed images can be prevented. The printed matter also has a high color density image and thus can be widely used as printed matter formed by, for example, ink-jet photo printing or ink-jet high-speed printing.

EXAMPLES

The present invention will now be further specifically described based on Examples and Comparative Examples. Only Example 2 is according to the invention; other "Examples" and "Preparation Examples" are described for reference and/or comparison only.

(Preparation Example 1) Preparation of urethane resin (A-1) water dispersion body

In a vessel equipped with a thermometer, a nitrogen gas-introducing tube, and a stirrer and purged with nitrogen, 100.2 parts by mass of polyether polyol ("PTMG 1000" manufactured by Mitsubishi Chemical Corporation, molecular weight 1000), 15.7 parts by mass of 2,2-dimethylolpropionic acid, 48.0 parts by mass of isophorone diisocyanate, 77.1 parts by mass of methyl ethyl ketone serving as an organic solvent, and 0.06 parts by mass of DMTDL (dibutyltin dilaurate) serving as a catalyst were caused to react with each other.

After the reaction was continued for four hours, 30.7 parts by mass of methyl ethyl ketone serving as a diluent solvent was supplied and the reaction was further continued.

When the molecular weight of the reaction product reached 20,000 to 60,000, 1.4 parts by mass of methanol was added to terminate the reaction. Thus, an organic solvent solution of a urethane resin (A'-1) was prepared.

By adding 13.4 parts by mass of 48 mass% aqueous potassium hydroxide solution to the organic solvent solution of the urethane resin (A'-1), part or the entirety of a carboxyl group in the urethane resin was neutralized. Subsequently, 715.3 parts by mass of water was added, and thorough stirring, aging, and removal of the solvent were performed to prepare a urethane resin (A-1) water dispersion body having a nonvolatile content of 25% by mass.

(Preparation Example 2) Preparation of urethane resin (A-2) water dispersion body

In a vessel equipped with a thermometer, a nitrogen gas-introducing tube, and a stirrer and purged with nitrogen, 112.9 parts by mass of polyether polyol ("PTMG 1000" manufactured by Mitsubishi Chemical Corporation, molecular weight 1000), 5.5 parts by mass of 2,2-dimethylolpropionic acid, 33.8 parts by mass of isophorone diisocyanate, 71.6 parts by mass of methyl ethyl ketone serving as an organic solvent, and 0.05 parts by mass of DMTDL (dibutyltin dilaurate) serving as a catalyst were caused to react with each other.

After the reaction was continued for four hours, 28.9 parts by mass of methyl ethyl ketone serving as a diluent solvent was supplied and the reaction was further continued.

When the molecular weight of the reaction product reached 20,000 to 60,000, 1.0 part by mass of methanol was added to terminate the reaction. Thus, an organic solvent solution of a urethane resin (A'-2) was prepared.

By adding 4.7 parts by mass of 48 mass% aqueous potassium hydroxide solution to the organic solvent solution of the urethane resin (A'-2), part or the entirety of a carboxyl group in the urethane resin was neutralized. Subsequently, 744.7 parts by mass of water was added, and thorough stirring, aging, and removal of the solvent were performed to prepare a urethane resin (A-2) water dispersion body having a nonvolatile content of 25% by mass.

(Preparation Example 3) Preparation of urethane resin (A-3) water dispersion body

In a vessel equipped with a thermometer, a nitrogen gas-introducing tube, and a stirrer and purged with nitrogen, 65.6 parts by mass of polyether polyol ("PTMG 1000" manufactured by Mitsubishi Chemical Corporation, molecular weight 1000), 24.1 parts by mass of 2,2-dimethylolpropionic acid, 54.4 parts by mass of isophorone diisocyanate, 67.7 parts by mass of methyl ethyl ketone serving as an organic solvent, and 0.05 parts by mass of DMTDL (dibutyltin dilaurate) serving as a catalyst were caused to react with each other.

After the reaction was continued for four hours, 26.7 parts by mass of methyl ethyl ketone serving as a diluent solvent was supplied and the reaction was further continued.

When the molecular weight of the reaction product reached 20,000 to 60,000, 1.6 parts by mass of methanol was added to terminate the reaction. Thus, an organic solvent solution of a urethane resin (A'-3) was prepared.

By adding 20.6 parts by mass of 48 mass% aqueous potassium hydroxide solution to the organic solvent solution of the urethane resin (A'-3), part or the entirety of a carboxyl group in the urethane resin was neutralized. Subsequently, 749.6 parts by mass of water was added, and thorough stirring, aging, and removal of the solvent were performed to prepare a urethane resin (A-3) water dispersion body having a nonvolatile content of 25% by mass.

(Preparation Example 4) Preparation of urethane resin (A-4) water dispersion body

In a vessel equipped with a thermometer, a nitrogen gas-introducing tube, and a stirrer and purged with nitrogen, 87.6 parts by mass of polyether polyol ("PTMG 1000" manufactured by Mitsubishi Chemical Corporation, molecular weight 1000), 6.6 parts by mass of cyclohexanedimethanol, 15.8 parts by mass of 2,2-dimethylolpropionic acid, 55.6 parts by mass of isophorone diisocyanate, 70.9 parts by mass of methyl ethyl ketone serving as an organic solvent, and 0.06 parts by mass of DMTDL (dibutyltin dilaurate) serving as a catalyst were caused to react with each other.

After the reaction was continued for four hours, 37.8 parts by mass of methyl ethyl ketone serving as a diluent solvent was supplied and the reaction was further continued.

When the molecular weight of the reaction product reached 20,000 to 60,000, 1.6 parts by mass of methanol was added to terminate the reaction. Thus, an organic solvent solution of a urethane resin (A'-4) was prepared.

By adding 13.5 parts by mass of 48 mass% aqueous potassium hydroxide solution to the organic solvent solution of the urethane resin (A'-4), part or the entirety of a carboxyl group in the urethane resin was neutralized. Subsequently, 710.8 parts by mass of water was added, and thorough stirring, aging, and removal of the solvent were performed to prepare a urethane resin (A-4) water dispersion body having a nonvolatile content of 25% by mass.

[Example 1]

Into a reaction vessel equipped with a stirrer, a reflux condenser, a nitrogen gas-introducing tube, a thermometer, a dropping funnel for dropping a monomer mixture, and a dropping funnel for dropping a polymerization catalyst, 741.0 parts by mass of the urethane resin (A-1) water dispersion body prepared in Preparation Example 1 was inserted, and the temperature was increased to 80°C while blowing nitrogen.

Into a reaction vessel heated to 80°C, a vinyl monomer mixture containing 32.4 parts by mass of n-butyl acrylate and 47.0 parts by mass of methyl methacrylate and 32.4 parts by mass of aqueous potassium persulfate solution (concentration: 2% by mass) were added dropwise under stirring from different dropping funnels over 60 minutes while keeping the temperature in the reaction vessel at 80 ± 2°C.

After the completion of the dropping, the reaction was continued under stirring at the same temperature for 180 minutes and then the resultant product was cooled to 30°C. The nonvolatile content was adjusted to 25% by mass using deionized water and filtration was performed with a 200-mesh filter to obtain a binder (X-1) for ink-jet printing ink.

[Example 2]

In a vessel equipped with a thermometer, a nitrogen gas-introducing tube, and a stirrer and purged with nitrogen, 68.5 parts by mass of polyether polyol ("PTMG 1000" manufactured by Mitsubishi Chemical Corporation, molecular weight 1000), 10.7 parts by mass of 2,2-dimethylolpropionic acid, 32.8 parts by mass of isophorone diisocyanate, 52.7 parts by mass of methyl ethyl ketone serving as an organic solvent, and 0.05 parts by mass of DMTDL (dibutyltin dilaurate) serving as a catalyst were caused to react with each other.

After the reaction was continued for four hours, 21.0 parts by mass of methyl ethyl ketone serving as a diluent solvent was supplied and the reaction was further continued.

When the molecular weight of the reaction product reached 20,000 to 60,000, 0.9 parts by mass of methanol was added to terminate the reaction. Thus, an organic solvent solution of a urethane resin was prepared.

After the organic solvent solution of a urethane resin was cooled to 60°C, a vinyl monomer mixture containing 13.0 parts by mass of n-butyl acrylate and 36.9 parts by mass of methyl methacrylate was supplied and mixed under stirring.

Part or the entirety of a carboxyl group in the urethane resin was neutralized by adding 9.1 parts by mass of 48 mass% aqueous potassium hydroxide solution to the obtained product. Furthermore, 734.5 parts by mass of water was added and stirring was thoroughly performed to obtain a water dispersion body containing the urethane resin and the vinyl monomer.

Subsequently, 20.3 parts by mass of aqueous potassium persulfate solution (concentration: 2% by mass) was added dropwise to the water dispersion body containing the urethane resin and the vinyl monomer and adjusted to 80°C using a dropping funnel over 10 minutes while carefully keeping the temperature in the reaction vessel at 80 ± 2°C and thus the polymerization was conducted.

After the completion of the dropping, the reaction was continued under stirring at the same temperature for 180 minutes and then the resultant product was cooled to 30°C and subjected to aging and removal of the solvent. The nonvolatile content was adjusted to 25% by mass using deionized water and filtration was performed with a 200-mesh filter to obtain a binder (X-2) for ink-jet printing ink.

[Example 3]

A binder (X-3) for ink-jet printing ink was produced in the same manner as in Example 1, except that the amount of the urethane resin (A-1) water dispersion body prepared in Preparation Example 1 was changed from 741.0 parts by mass to 925.8 parts by mass, a vinyl monomer mixture containing 10.5 parts by mass of n-butyl acrylate and 15.2 parts by mass of methyl methacrylate was used instead of the vinyl monomer mixture containing 32.4 parts by mass of n-butyl acrylate and 47.0 parts by mass of methyl methacrylate, and the amount of the aqueous potassium persulfate solution was changed from 32 parts by mass to 10.5 parts by mass.

[Example 4]

A binder (X-4) for ink-jet printing ink was produced in the same manner as in Example 1, except that the amount of the urethane resin (A-1) water dispersion body prepared in Preparation Example 1 was changed from 741.0 parts by mass to 404.4 parts by mass, a vinyl monomer mixture containing 61.9 parts by mass of n-butyl acrylate and 89.8 parts by mass of methyl methacrylate was used instead of the vinyl monomer mixture containing 32.4 parts by mass of n-butyl acrylate and 47.0 parts by mass of methyl methacrylate, and the amount of the aqueous potassium persulfate solution was changed from 32 parts by mass to 61.9 parts by mass.

[Example 5]

A binder (X-5) for ink-jet printing ink was produced in the same manner as in Example 1, except that 741.0 parts by mass of the urethane resin (A-2) water dispersion body prepared in Preparation Example 2 was used instead of 741.0 parts by mass of the urethane resin (A-1) water dispersion body prepared in Preparation Example 1.

[Example 6]

A binder (X-6) for ink-jet printing ink was produced in the same manner as in Example 1, except that 741.0 parts by mass of the urethane resin (A-3) water dispersion body prepared in Preparation Example 3 was used instead of 741.0 parts by mass of the urethane resin (A-1) water dispersion body prepared in Preparation Example 1.

[Example 7]

A binder (X-7) for ink-jet printing ink was produced in the same manner as in Example 1, except that 741.0 parts by mass of the urethane resin (A-4) water dispersion body prepared in Preparation Example 4 was used instead of 741.0 parts by mass of the urethane resin (A-1) water dispersion body prepared in Preparation Example 1.

[Example 8]

A binder (X-8) for ink-jet printing ink was produced in the same manner as in Example 1, except that a vinyl monomer mixture containing 50.0 parts by mass of n-butyl acrylate and 29.9 parts by mass of methyl methacrylate was used instead of the vinyl monomer mixture containing 32.4 parts by mass of n-butyl acrylate and 47.0 parts by mass of methyl methacrylate.

[Comparative Example 1]

In a vessel equipped with a thermometer, a nitrogen gas-introducing tube, and a stirrer and purged with nitrogen, 100.2 parts by mass of polyether polyol ("PTMG 1000" manufactured by Mitsubishi Chemical Corporation, molecular weight 1000), 15.7 parts by mass of 2,2-dimethylolpropionic acid, 48.0 parts by mass of isophorone diisocyanate, 77.1 parts by mass of methyl ethyl ketone serving as an organic solvent, and 0.06 parts by mass of DMTDL (dibutyltin dilaurate) serving as a catalyst were caused to react with each other.

After the reaction was continued for four hours, 30.7 parts by mass of methyl ethyl ketone serving as a diluent solvent was supplied and the reaction was further continued.

When the molecular weight of the reaction product reached 20,000 to 60,000, 1.4 parts by mass of methanol was added to terminate the reaction. Thus, an organic solvent solution of a urethane resin (Y'-1) was prepared.

Part or the entirety of a carboxyl group in the urethane resin was neutralized by adding 13.4 parts by mass of 48% aqueous potassium hydroxide solution to the organic solvent solution of a urethane resin (Y'-1). Furthermore, 715.3 parts by mass of water was added and stirring was thoroughly performed. Subsequently, aging and removal of the solvent were performed to obtain a binder (Y-1) for ink-jet printing ink composed of a urethane resin water dispersion body having a nonvolatile content of 25% by mass.

[Comparative Example 2]

In a pre-emulsion mixing vessel, 749.9 parts by mass of deionized water and 9.6 parts by mass of an emulsifier NOIGEN XL-400 (polyoxyethylene decyl ether manufactured by Dai-ichi Kogyo Seiyaku Co., Ltd., solid content 100% by mass) were mixed and stirred.

Subsequently, 98.6 parts by mass of n-butyl acrylate, 137.1 parts by mass of methyl methacrylate, and 4.8 parts by mass of methacrylic acid were added to the vessel in order and stirred to prepare a pre-emulsion of a vinyl monomer mixture.

Next, 100 parts by mass of deionized water was inserted into a reaction vessel equipped with a stirrer, a reflux condenser, a nitrogen gas-introducing tube, a thermometer, and a dropping funnel and heated to 80°C while blowing nitrogen. Under stirring, 0.3 parts by mass of ammonium persulfate was added to the deionized water, and the pre-emulsion of a vinyl monomer mixture was added dropwise over 120 minutes while keeping the temperature in the reaction vessel at $80 \pm 2$°C to perform polymerization.

After the completion of the dropping, the temperature in the reaction vessel was kept for 60 minutes under stirring and the reaction product was cooled to 30°C. The nonvolatile content was adjusted to 25% by mass using deionized water to obtain a binder (Y-2) for ink-jet printing ink composed of a vinyl polymer water dispersion body.

[Comparative Example 3]

Seven hundred parts by mass of the binder (Y-1) for ink-jet printing ink obtained in Comparative Example 1 and 300 parts by mass of the binder (Y-2) for ink-jet printing ink obtained in Comparative Example 2 were mixed and stirred. Subsequently, deionized water was added so that the nonvolatile content was adjusted to 25% by mass. Thus, a binder (Y-3) for ink-jet printing ink in which the urethane resin and the vinyl polymer were each independently dispersed in water was obtained.

(Preparation Example 5) Preparation of aqueous dispersion body of quinacridone pigment

Into a 50 L planetary mixer PLM-V-50V (INOUE MFG., INC.), 1500 g of vinyl polymer (styrene/acrylic acid/methacrylic acid = 77/10/13 (mass ratio), weight-average molecular weight 11,000, acid value 156 mgKOH/g), 4630 g of quinacridone pigment (Cromophtal Jet Magenta DMQ manufactured by Ciba Specialty Chemicals Inc.), 380 g of phthalimide methylated 3,10-dichloroquinacridone (the average number of phthalimidemethyl groups per molecule 1.4), 2600 g of diethylene glycol, and 688 g of 34 mass% aqueous potassium hydroxide solution were charged and continuously kneaded for four hours.

To the kneaded product, 8000 g in total of ion-exchanged water heated to 60°C was added over two hours to obtain a colored resin composition having a nonvolatile content of 37.9% by mass.

To 12 kg of the colored resin composition obtained by the above method, 744 g of diethylene glycol and 7380 g of ion-exchanged water were added little by little and stirred using a dispersing device to obtain a precursor of an aqueous pigment dispersion liquid (aqueous pigment dispersion liquid before dispersion treatment).

Subsequently, 18 kg of the precursor of an aqueous pigment dispersion liquid was processed using a bead mill (Nano Mill NM-G2L manufactured by ASADA IRON WORKS. CO., LTD., bead ϕ: zirconia bead with a size of 0.3 mm, the amount of beads charged: 85%, the temperature of cooling water: 10°C, the number of revolutions: 2660 revolutions/minute). The resultant solution processed through the bead mill was subjected to a centrifugal treatment at 13,000 G for 10 minutes and then filtered using a filter having an effective pore diameter of 0.5 μm to obtain an aqueous dispersion body of a quinacridone pigment. The concentration of the quinacridone pigment in the aqueous dispersion body was 14.9% by mass.

[Preparation of ink-jet printing ink]

Each of the binders for ink-jet printing ink obtained in Examples 1 to 8 and Comparative Examples 1 to 3, the aqueous dispersion body of a quinacridone pigment obtained in Preparation Example 5, 2-pyrrolidinone, triethylene glycol monobutyl ether, glycerol, a surfactant (Surfynol 440 manufactured by Air Products and Chemicals, Inc.), and ion-exchanged water were mixed and stirred in accordance with the following mixing ratio so that the concentration of the quinacridone pigment was 4% by mass and the concentration of the urethane resin was 1% by mass. Thus, an ink-jet printing ink was prepared.

(Mixing ratio of ink-jet printing ink)

- Aqueous dispersion body of quinacridone pigment obtained in Preparation Example 5 (pigment concentration 14.9% by mass): 26.8 g
- 2-pyrrolidinone: 8.0 g
- Triethylene glycol monobutyl ether: 8.0 g
- Glycerol: 3.0 g
- Surfactant (Surfynol 440 manufactured by Air Products and Chemicals, Inc.): 0.5 g
- Ion-exchanged water: 48.7 g
- Binders for ink-jet printing ink obtained in Examples 1 to 8 and Comparative Examples 1 to 3 (nonvolatile content 25% by mass): 4.0 g

[Measurement of weight-average molecular weight]

The weight-average molecular weight of the urethane resin was measured by gel permeation chromatography (GPC). Specifically, a polyurethane (C) was applied onto a glass plate using a 3 mil applicator and dried at room temperature for one hour to form a semi-dry film. The resultant film was detached from the glass plate and 0.4 g of the film was dissolved in 100 g of tetrahydrofuran to prepare a measurement sample.

A high-performance liquid chromatograph HLC-8220 manufactured by Tosoh Corporation was used as the measurement equipment. Columns of TSK-GEL (HXL-H, G5000HXL, G4000HXL, G3000HXL, and G2000HXL) manufactured by Tosoh Corporation were used in a combined manner.

A calibration curve was made by using, as standard samples, standard polystyrenes (molecular weight: 4,480,000, 4,250,000, 2,880,000, 2,750,000, 1,850,000, 860,000, 450,000, 411,000, 355,000, 190,000, 160,000, 96,400, 50,000, 37,900, 19,800, 19,600, 5,570, 4,000, 2,980, 2,030, and 500) manufactured by Showa Denko K.K. and Tosoh Corporation.

Tetrahydrofuran was used as an eluent and a sample dissolving liquid. The weight-average molecular weight was measured using an RI detector at a flow rate of 1 mL/min at a sample injection amount of 500 μL in a sample concentration of 0.4%.

[Evaluation of storage stability of ink-jet printing ink]

The evaluation was conducted based on the viscosity of the obtained ink-jet printing ink and the particle size of particles dispersed in the ink. The viscosity was measured with VISCOMETER TV-22 manufactured by Toki Sangyo Co., Ltd. and the particle size was measured with Microtrack UPA EX150 manufactured by NIKKISO CO., LTD.

The ink was then put into a glass container such as a screw tube with hermetical sealing. After a heating test was conducted in a thermostat at 70°C for four weeks, the viscosity of the ink and the particle size of particles dispersed in the ink were measured by the same method as above.

The changes in the viscosity and particle size of the ink after the heating test from the viscosity and particle size of the ink before the heating test were calculated from the following formulae to evaluate the storage stability of the ink.

(Formula I)

[{(Particle size of particles dispersed in ink after heating test) - (Particle size of particles dispersed in ink before heating test)}/(Particle size of particles dispersed in ink before heating test)] × 100

[Criteria]

Good: The ratio of the change in the particle size was less than 5%.
Fair: The ratio of the change in the particle size was 5% or more and less than 10%.
Poor: The ratio of the change in the particle size was 10% or more.

(Formula II)

[{(Viscosity of ink after heating test) - (Viscosity of ink before heating test)}/(Viscosity of ink before heating test)] × 100

[Criteria]

Good: The ratio of the change in the viscosity was less than 2%.
Fair: The ratio of the change in the viscosity was 2% or more and less than 5%.
Poor: The ratio of the change in the viscosity was 5% or more.

[Evaluation of discharge stability of ink]

A diagnostic page was printed with Photosmart D5360 (manufactured by Hewlett-Packard Company) in which the black ink cartridge was filled with the ink-jet printing ink and the nozzle state was checked. Solid printing with a print density of 100% was continuously performed on 20 pages in a region of 18 cm × 25 cm per page. Then, a diagnostic page was printed again and the nozzle state was checked. The change in the nozzle states before and after the continuous solid printing was evaluated as the ink dischargeability. The evaluation criteria are shown below.

[Criteria]

Excellent: No change in the nozzle states was observed and no irregular ink discharge occurred.
Good: Slight adhesion of the ink to the nozzle was observed, but no irregularity of the discharge direction of the ink occurred.
Fair: After solid printing was continuously performed on 20 pages, irregularity of the discharge direction of the ink or no discharge of the ink occurred.
Poor: Irregularity of the discharge direction of the ink or no discharge of the ink occurred during the printing, and thus the 20 pages were not completely printed in a continuous manner.

[Evaluation of printing properties of ink-jet printing ink] (Gloss)

Solid printing with a print density of 100% was performed on a printing surface of photographic paper (glossy) [HP Advanced Photo Paper manufactured by Hewlett-Packard Company], which is special paper for ink-jet printing, using a commercially available thermal jet-type ink-jet printer (Photosmart D5360 manufactured by Hewlett-Packard Company) in which the black ink cartridge was filled with the ink.
After the obtained printed matter was left to stand at room temperature for 24 hours, gloss at 20 degrees was measured at three arbitrary positions of the printed matter using Micro-Haze Plus (manufactured by Toyo Seiki Seisakusho, Ltd.) and the average value was calculated.

[Scratch resistance]

Solid printing with a print density of 100% was performed on a printing surface of photographic paper (glossy) [HP Advanced Photo Paper manufactured by Hewlett-Packard Company] using a commercially available thermal jet-type ink-jet printer (Photosmart D5360 manufactured by Hewlett-Packard Company) in which the black ink cartridge was filled with the ink. Thus, printed matter for evaluation was obtained.

After the printed matter for evaluation was dried at room temperature for 10 minutes, the printed surface was rubbed with a nail while applying a load of about 5 kg. The degree of rubbing of color or the like on the printed surface was evaluated through visual inspection based on the following evaluation criteria. Note that "-" is given in Tables when this evaluation was not able to be conducted because the printed matter for evaluation was not obtained due to insufficient discharge stability of ink.

[Criteria]

A: No scratches were formed at all on the printed surface and the detachment and the like of a printed material were not observed.

B: Scratches were slightly formed on the printed surface, but this caused no practical problems and the detachment and the like of a printed material were not observed.

C: Scratches were slightly formed on the printed surface and the detachment and the like of a printed material were also observed.

D: Scratches were considerably formed in about 50% or more of an area of the printed surface and the detachment and the like of a printed material were also observed.

[Durability]

(Alkali resistance)

After the printed matter for evaluation was dried at room temperature for 10 minutes, three drops of 0.5 mass% aqueous KOH solution were dropped onto the printed surface with a dropper. After 10 seconds, the printed surface was rubbed with a finger to evaluate the surface state of the printed surface through visual inspection. The evaluation criteria are shown below. Note that "unable to print" is given in Tables when this evaluation was not able to be conducted because the printed matter for evaluation was not obtained due to insufficient discharge stability of ink.

[Criteria]

A: Detachment of a color material and the like was not observed on the printed surface and discoloration of the printed surface was also not observed.

B: Detachment of a color material and the like was not observed on the printed surface, but slight discoloration of the printed surface was observed to such a degree that practical problems were not caused.

C: A small degree of detachment of a color material and the like was observed on part of the printed surface and part of the printed surface was discolored.

D: A large degree of detachment of a color material and the like was observed in about 50% or more of an area of the printed surface and the printed surface was discolored.

(Alcohol resistance)

After the printed matter for evaluation was dried at room temperature for 10 minutes, three drops of 5 mass% aqueous ethanol solution were dropped onto the printed surface with a dropper. After 10 seconds, the printed surface was rubbed with a finger to evaluate the surface state of the printed surface through visual inspection. The evaluation criteria are shown below. Note that "unable to print" is given in Tables when this evaluation was not able to be conducted because the printed matter for evaluation was not obtained due to insufficient discharge stability of ink.

[Criteria]

A: Detachment of a color material and the like was not observed on the printed surface and discoloration of the printed surface was also not observed.
B: Detachment of a color material and the like was not observed on the printed surface, but slight discoloration of the printed surface was observed to such a degree that practical problems were not caused.
C: A small degree of detachment of a color material and the like was observed on part of the printed surface and part of the printed surface was discolored.
D: A large degree of detachment of a color material and the like was observed in about 50% or more of an area of the printed surface and the printed surface was discolored.

[Table 1]

| Table 1 | | Example 1 | Example 2 | Example 3 | Example 4 |
|---|---|---|---|---|---|
| [Urethane resin (A)/vinyl polymer (B)] | | 70/30 | 70/30 | 90/10 | 40/60 |
| Urethane resin (A) | | | | | |
| Polyol (a1) | | PTMG 1000 | PTMG 1000 | PTMG 1000 | PTMG 1000 |
| | | DMPA | DMPA | DMPA | DMPA |
| Polyisocyanate (a2) | | IPDI | IPDI | IPDI | IPDI |
| Acid value | | 40 | 40 | 40 | 40 |
| Weight-average molecular weight | | 50,000 | 50,000 | 50,000 | 50,000 |
| Concentration of alicyclic structure relative to the total amount of urethane resin [mmol/kg] | | 1,317 | 911 | 1,317 | 1,317 |
| Vinyl polymer (B) | | | | | |
| Vinyl monomer (b1) | | BA | BA | BA | BA |
| | | MMA | MMA | MMA | MMA |
| Storage stability | | | | | |
| | Change in particle size | Good | Good | Good | Good |
| | Change in viscosity | Good | Good | Good | Good |
| Printing properties | | | | | |
| | Discharge stability of ink | Excellent | Excellent | Good | Good |
| | Gloss | 68 | 68 | 68 | 63 |
| | Scratch resistance | A | A | A | B |
| | Alkali resistance | B | B | B | B |
| | Alcohol resistance | B | B | B | B |

[Table 2]

| Table 2 | Example 5 | Example 6 | Example 7 | Example 8 |
|---|---|---|---|---|
| [Urethane resin (A)/vinyl polymer (B)] | 70/30 | 70/30 | 70/30 | 70/30 |
| Urethane resin (A) | | | | |

(continued)

| Table 2 | Example 5 | Example 6 | Example 7 | Example 8 |
|---|---|---|---|---|
| Polyol (a1) | PTMG 1000 | PTMG 1000 | PTMG 1000 | PTMG 1000 |
| | - | - | CHDM | - |
| | DMPA | DMPA | DMPA | DMPA |
| Polyisocyanate (a2) | IPDI | IPDI | IPDI | IPDI |
| Acid value | 15 | 60 | 40 | 40 |
| Weight-average molecular weight | 50,000 | 50,000 | 50,000 | 50,000 |
| Concentration of alicyclic structure relative to the total amount of urethane resin [mmol/kg] | 999 | 1,571 | 1,787 | 1,317 |
| Vinyl polymer (B) | | | | |
| Vinyl monomer (b1) | BA | BA | BA | BA |
| | MMA | MMA | MMA | MMA |
| Storage stability | | | | |
| Change in particle size | Good | Good | Good | Good |
| Change in viscosity | Good | Good | Good | Good |
| Printing properties | | | | |
| Discharge stability of ink | Good | Fair | Excellent | Excellent |
| Gloss | 63 | 68 | 68 | 65 |
| Scratch resistance | A | A | A | A |
| Alkali resistance | B | B | A | B |
| Alcohol resistance | B | B | A | B |

[Table 3]

| Table 3 | Comparative Example 1 | Comparative Example 2 | Comparative Example 3 |
|---|---|---|---|
| [Urethane resin (A)/vinyl polymer (B)] | 100/0 | 0/100 | 70/30 (no formation of composite resin particles) |
| Urethane resin (A) | | | |
| Polyol (a1) | PTMG 1000 | - | PTMG 2000 |
| | DMPA | - | DMPA |
| Polyisocyanate (a2) | IPDI | | IPDI |
| Acid value | 40 | - | 40 |
| Concentration of alicyclic structure relative to the total amount of urethane resin [mmol/kg] | 1,317 | - | 1,317 |
| Weight-average molecular weight | 50,000 | - | 50,000 |
| Vinyl polymer (B) | | | |
| Vinyl monomer (b1) | - | BA | BA |
| | - | MMA | MMA |
| Glass transition temperature (°C) | - | 25 | -25 |
| Storage stability | | | |

(continued)

| Table 3 | Comparative Example 1 | Comparative Example 2 | Comparative Example 3 |
|---|---|---|---|
| Change in particle size | Good | Good | Good |
| Change in viscosity | Good | Good | Good |
| Printing properties | | | |
| Discharge stability of ink | Good | Poor | Poor |
| Gloss | 65 | 62 | 60 |
| Scratch resistance | B | D | C |
| Alkali resistance | C | C | C |
| Alcohol resistance | D | D | C |

The abbreviations in Tables 1 to 3 are described below

"PTMG 1000": polyoxytetramethylene glycol with a number-average molecular weight of 2000 manufactured by Mitsubishi Chemical Corporation

"DMPA": dimethylolpropionic acid

"IPDI": isophorone diisocyanate

"CHDM": 1,4-cyclohexanedimethanol

"BA": n-butyl acrylate

"MMA": methyl methacrylate

**Claims**

1. A method for producing a binder for ink-jet printing ink, the binder containing an aqueous medium (D) and composite resin particles (C) in which part or the entirety of a vinyl polymer (B) is contained in particles of a urethane resin (A) having a hydrophilic group, the hydrophilic group in the urethane resin (A) being a carboxyl group neutralized with potassium hydroxide or an aqueous solution of potassium hydroxide, the method comprising mixing a urethane resin (A) having a hydrophilic group and a vinyl monomer (b1) without using a solvent or in the presence of an organic solvent to prepare a mixture; then mixing the mixture and an aqueous medium (D) to prepare a composition containing the aqueous medium (D) and resin particles (C') in which part or the entirety of the vinyl monomer (b1) is contained in particles of the urethane resin (A) having a hydrophilic group; and then mixing the composition and a polymerization initiator to cause radical polymerization.

2. The method for producing a binder for ink-jet printing ink according to Claim 1, wherein the composite resin particles (C) are core-shell type composite resin particles including a shell layer composed of the urethane resin (A) having a hydrophilic group and a core layer composed of the vinyl polymer (B).

3. The method for producing a binder for ink-jet printing ink according to Claim 1, wherein the urethane resin (A) having a hydrophilic group and the vinyl polymer (B) are not covalently bonded to each other.

4. The method for producing a binder for ink-jet printing ink according to Claim 1, wherein the urethane resin (A) has an acid value of 10 to 80.

5. The method for producing a binder for ink-jet printing ink according to Claim 1, wherein the urethane resin (A) is obtained by a reaction of a polyisocyanate (a2) and a polyol (a1) containing a hydrophilic group-containing polyol (a1-1) and a polyether polyol (a1-2) other than the hydrophilic group-containing polyol (a1-1).

6. The method for producing a binder for ink-jet printing ink according to Claim 5, wherein the polyol (a1) further contains an alicyclic structure-containing polyol (a1-3).

7. The method for producing a binder for ink-jet printing ink according to Claim 1, wherein the urethane resin (A) contains an alicyclic structure in the range of 900 mmol/kg to 5500 mmol/kg relative to the total amount of the urethane resin (A).

8. The method for producing a binder for ink-jet printing ink according to Claim 1, wherein the vinyl polymer (B) is obtained by polymerizing a vinyl monomer containing a (meth)acrylic acid alkyl ester having an alkyl group with 1 to 6 carbon atoms.

9. The method for producing a binder for ink-jet printing ink according to Claim 1, wherein the mass ratio [(A)/(B)] of the urethane resin (A) to the vinyl polymer (B) is in the range of 1/99 to 99/1.

**Patentansprüche**

1. Verfahren zur Herstellung eines Bindemittels für Tintenstrahldrucktinte, wobei das Bindemittel ein wässriges Medium (D) und Kompositharzpartikel (C) enthält, bei denen ein Teil oder die Gesamtheit eines Vinylpolymers (B) in Partikeln eines Urethanharzes (A) mit einer hydrophilen Gruppe enthalten ist, wobei die hydrophile Gruppe in dem Urethanharz (A) eine Carboxylgruppe, die mit Kaliumhydroxid oder einer wässrigen Lösung von Kaliumhydroxid neutralisiert wurde, ist, wobei das Verfahren Mischen eines Urethanharzes (A) mit einer hydrophilen Gruppe und eines Vinylmonomers (b1) ohne die Verwendung eines Lösungsmittels oder in der Gegenwart eines organischen Lösungsmittels, um ein Gemisch herzustellen; dann Mischen des Gemisches und eines wässrigen Mediums (D), um eine Zusammensetzung herzustellen, die das wässrige Medium (D) und Harzpartikel (C'), bei denen ein Teil oder die Gesamtheit des Vinylmonomers (b1) in Partikeln des Urethanharzes (A) mit einer hydrophilen Gruppe enthalten ist, enthält; und dann Mischen der Zusammensetzung und eines Polymerisationsinitiators, um eine radikalische Polymerisation zu verursachen, umfasst.

2. Verfahren zur Herstellung eines Bindemittels für Tintenstrahldrucktinte gemäß Anspruch 1, wobei die Kompositharzpartikel (C) Kompositharzpartikel vom Kern-Schale-Typs sind, die eine Schalenschicht, bestehend aus dem Urethanharz (A) mit einer hydrophilen Gruppe, und eine Kernschicht, bestehend aus dem Vinylpolymer (B), umfassen.

3. Verfahren zur Herstellung eines Bindemittels für Tintenstrahldrucktinte gemäß Anspruch 1, wobei das Urethanharz (A) mit einer hydrophilen Gruppe und das Vinylpolymer (B) nicht kovalent aneinander gebunden werden.

4. Verfahren zur Herstellung eines Bindemittels für Tintenstrahldrucktinte gemäß Anspruch 1, wobei das Urethanharz (A) eine Säurezahl von 10 bis 80 hat.

5. Verfahren zur Herstellung eines Bindemittels für Tintenstrahldrucktinte gemäß Anspruch 1, wobei das Urethanharz (A) durch eine Reaktion eines Polyisocyanats (a2) und eines Polyols (a1), welches ein Polyol, das eine hydrophile Gruppe enthält, (a1-1) und ein Polyetherpolyol (a1-2) anders als das Polyol, das eine hydrophile Gruppe enthält, (a1-1) enthält, erhalten wird.

6. Verfahren zur Herstellung eines Bindemittels für Tintenstrahldrucktinte gemäß Anspruch 5, wobei das Polyol (a1) weiterhin ein Polyol, das eine alicyclische Struktur enthält, (a1-3) enthält.

7. Verfahren zur Herstellung eines Bindemittels für Tintenstrahldrucktinte gemäß Anspruch 1, wobei das Urethanharz (A) eine alicyclische Struktur im Bereich von 900 mmol/kg bis 5500 mmol/kg bezogen auf die Gesamtmenge des Urethanharzes (A) enthält.

8. Verfahren zur Herstellung eines Bindemittels für Tintenstrahldrucktinte gemäß Anspruch 1, wobei das Vinylpolymer (B) durch Polymerisieren eines Vinylmonomers, das einen (Meth)acrylsäurealkylester mit einer Alkylgruppe mit 1 bis 6 Kohlenstoffatomen enthält, erhalten wird.

9. Verfahren zur Herstellung eines Bindemittels für Tintenstrahldrucktinte gemäß Anspruch 1, wobei das Massenverhältnis [(A)/(B)] des Urethanharzes (A) zu dem Vinylpolymer (B) im Bereich von 1/99 bis 99/1 liegt.

**Revendications**

1. Procédé de production d'un liant pour une encre d'impression à jet d'encre, le liant contenant un milieu aqueux (D) et des particules de résine composite (C) dans lequel une partie ou l'intégralité d'un polymère de vinyle (B) est contenue dans des particules d'une résine d'uréthane (A) ayant un groupe hydrophile, le groupe hydrophile dans la résine d'uréthane (A) étant un groupe carboxyle neutralisé avec de l'hydroxyde de potassium ou une solution aqueuse d'hydroxyde de potassium, le procédé comprenant le mélangeage d'une résine d'uréthane (A) ayant un groupe hydrophile et un monomère de vinyle (b1) sans utiliser de solvant ou en présence d'un solvant organique pour préparer un mélange ; puis le mélangeage du mélange et d'un milieu aqueux (D) pour préparer une composition contenant le milieu aqueux (D) et des particules de résine (C') dans lesquelles une partie ou l'intégralité du monomère de vinyle (b1) est contenue dans des particules de la résine d'uréthane (A) ayant un groupe hydrophile ; puis le mélangeage de la composition et d'un initiateur de polymérisation pour provoquer une polymérisation radicalaire.

2. Procédé de production d'un liant pour une encre d'impression à jet d'encre selon la revendication 1, dans lequel les particules de résine composite (C) sont des particules de résine composite de type noyau-carapace incluant une couche de carapace composée de la résine d'uréthane (A) comportant un groupe hydrophile et une couche de noyau composée du polymère de vinyle (B).

3. Procédé de production d'un liant pour une encre d'impression à jet d'encre selon la revendication 1, dans lequel la résine d'uréthane (A) comportant un groupe hydrophile et le polymère de vinyle (B) ne sont pas liés de manière covalente l'un à l'autre.

4. Procédé de production d'un liant pour une encre d'impression à jet d'encre selon la revendication 1, dans lequel la résine d'uréthane (A) a un indice d'acide de 10 à 80.

5. Procédé de production d'un liant pour une encre d'impression à jet d'encre selon la revendication 1, dans lequel la résine d'uréthane (A) est obtenue par une réaction d'un polyisocyanate (a2) et d'un polyol (a1) contenant un polyol contenant un groupe hydrophile (a1-1) et un polyéther polyol (a1-2) autre que le polyol contenant un groupe hydrophile (a1-1).

6. Procédé de production d'un liant pour une encre d'impression à jet d'encre selon la revendication 5, dans lequel le polyol (a1) contient en outre un polyol contenant une structure alicyclique (a1-3).

7. Procédé de production d'un liant pour une encre d'impression à jet d'encre selon la revendication 1, dans lequel la résine d'uréthane (A) contient une structure alicyclique dans la plage de 900 mmol/kg à 5500 mmol/kg par rapport à la quantité totale de la résine d'uréthane (A).

8. Procédé de production d'un liant pour une encre d'impression à jet d'encre selon la revendication 1, dans lequel le polymère de vinyle (B) est obtenu par polymérisation d'un monomère de vinyle contenant un ester d'alkyle d'acide (méth)acrylique ayant un groupe alkyle de 1 à 6 atomes de carbone.

9. Procédé de production d'un liant pour une encre d'impression à jet d'encre selon la revendication 1, dans lequel le rapport massique [(A)/(B)] de la résine d'uréthane (A) sur le polymère de vinyle (B) est dans la plage de 1/99 à 99/1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010273930 A1
- KR 20100121244 A
- JP 2000351805 A
- US 2009020036 A1
- JP 2010229310 A
- JP 2002256184 A
- JP H061940 A
- JP 2000001639 A